# DEMANDE DE BREVET EUROPEEN

(11) **EP 1 630 019 A1**
(43) Date de publication de la demande: **01.03.2006**
(21) Numéro de dépôt: 05291709.3
(22) Date de dépôt: 10.08.2005
(51) Int. Cl.: B60J 5/04

(54) **Cale anti-bruit montée sur une barre de renfort de porte de véhicule automobile**

(30) Priorité: 31.08.2004 FR 0409214
(71) Demandeur: Peugeot Citroen Automobiles SA, 78140 Vélizy Villacoublay (FR)
(72) Inventeur: Desreaux, Pascal, 35170 Bruz (FR)
(74) Mandataire: Berger, Helmut

(57) **Abrégé**

La présente invention concerne une cale anti-bruit montée sur une barre de renfort de porte de véhicule automobile.

La cale est caractérisée en ce qu'elle est positionnée sur la barre de renfort (2) par un goujon (6) dont l'extrémité filetée peut s'engager au travers d'une fente (7) de la cale (5) de manière que les bords de la fente (7) coopèrent avec les gorges du filetage du goujon (6) pour assurer le maintien de la cale (5) à une hauteur réglable relativement à la barre (2).

L'invention trouve application dans le domaine de l'automobile.

## Description

La présente invention concerne une cale pouvant être montée sur une barre de renfort interne de porte de véhicule automobile.

L'usage de barres de renfort intégrées dans les portes avant et arrière d'un véhicule automobile s'est répandu ces dernières années dans le but d'améliorer la sécurité des véhicules lors de chocs latéraux.

Chaque barre de renfort s'étend longitudinalement au véhicule entre le panneau extérieur de la porte et la vitre de celle-ci.

Lors de la fermeture de la porte, la vitre, notamment lorsqu'elle occupe sa position basse dans la porte, peut se déplacer transversalement à l'axe longitudinal du véhicule jusqu'à heurter la barre de renfort et provoquer de la sorte un bruit de claquement désagréable.

Pour éviter ces bruits de claquement, il est connu du document FR-A-2 704 488 de disposer des cales sur les barres de renfort.

Selon ce document antérieur, un pion soudé sur la barre de renfort permet d'indexer la cale le long de cette barre et possède une tête empêchant la sortie vers le haut de la cale et, par conséquent, une boutonnière réalisée dans la cale est nécessaire pour permettre le passage de la tête du pion au travers de la cale et le maintien de cette dernière sur la barre.

La présence d'une telle boutonnière complique la mise en place de la cale sur la barre de renfort et ne permet pas un réglage en hauteur de la cale relativement à cette barre. En outre, la cale peut se déplacer le long de la barre de renfort par des vibrations appliquées sur cette barre à un emplacement auquel la cale peut s'échapper de la tête du pion et, par conséquent, se détacher de la barre de renfort.

La présente invention a pour but d'éliminer les inconvénients ci-dessus en proposant une cale anti-bruit pouvant être montée sur une barre de renfort interne de porte de véhicule automobile en un emplacement permettant d'amortir tout bruit de contact avec la vitre de porte occupant notamment sa position basse lors de la fermeture de la porte, la cale étant positionnée sur la barre de renfort par un élément d'indexation solidaire de la barre, et qui caractérisée en ce que l'élément d'indexation est un goujon dont l'extrémité filetée peut s'engager au travers d'une fente s'écartant élastiquement de la cale de manière que les bords de la fente coopèrent avec les gorges du filetage du goujon pour assurer le maintien de la cale à une hauteur réglable relativement à la barre.

La cale est également maintenue sur la barre de renfort à l'opposé du goujon d'indexation par un faisceau de fils électriques solidaire de la porte et dont une partie est en appui sur une aile de la cale pour la plaquer sur une paroi correspondante de la porte.

Le goujon d'indexation est fixé en partie haute de la barre de renfort et l'aile de la cale est plaquée en partie basse de la barre de renfort sous cette dernière.

La cale est réalisée en un matériau mousse thermoformé relativement rigide pouvant se déformer élastiquement pour sa mise en place sur la barre de renfort.

La cale se présente avantageusement sous une forme de manchon à section transversale sensiblement en Ω enfilé sur la barre de renfort cylindrique et dont la majeure partie de la paroi arquée est dirigée vers la vitre.

Le faisceau de fils électriques est fixé à la porte de part et d'autre de l'aile de la cale par des brides de fixation.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective représentant une cale anti-bruit montée sur une barre de renfort de porte de véhicule automobile conformément à l'invention ; et
- la figure 2 est une vue de dessus suivant la flèche II de la figure 1.

En se reportant aux figures, la référence 1 désigne une partie d'une porte d'un véhicule automobile équipée d'une barre de renfort 2 s'étendant longitudinalement au véhicule et disposée entre le panneau extérieur 3 de la porte 1 et la vitre 4 de cette porte représentée en traits mixtes.

La vitre 4 est guidée dans son déplacement vertical par un chariot associé à un rail lève-vitre, non représentés, pour ouvrir ou fermer sélectivement la vitre.

La barre de renfort 2 porte une cale 5 disposée en regard de la vitre 4 à une certaine distance de celle-ci et permettant d'éviter les bruits de claquement de la vitre 4 sur la barre 2 lors d'un mouvement de fermeture particulièrement violent de la porte 1.

La cale 5 est positionnée longitudinalement sur la barre de renfort 2 par un élément d'indexation 6 solidaire de la barre 2.

Selon l'invention, l'élément d'indexation 6 est constitué par un goujon dont une extrémité filetée est ancrée dans la barre 2 en partie supérieure de celle-ci en s'étendant perpendiculairement à la barre 2 et l'extrémité filetée opposée fait saillie extérieurement. En variante, le goujon d'indexation 6 peut être soudé directement sur la barre 2 au lieu d'être fixé par vissage sur celle-ci.

De préférence, la cale 5 est réalisée en un matériau mousse thermoformé sensiblement en forme de manchon présentant en section transversale une forme en Ω pouvant s'adapter à la forme cylindrique de la barre de renfort 2.

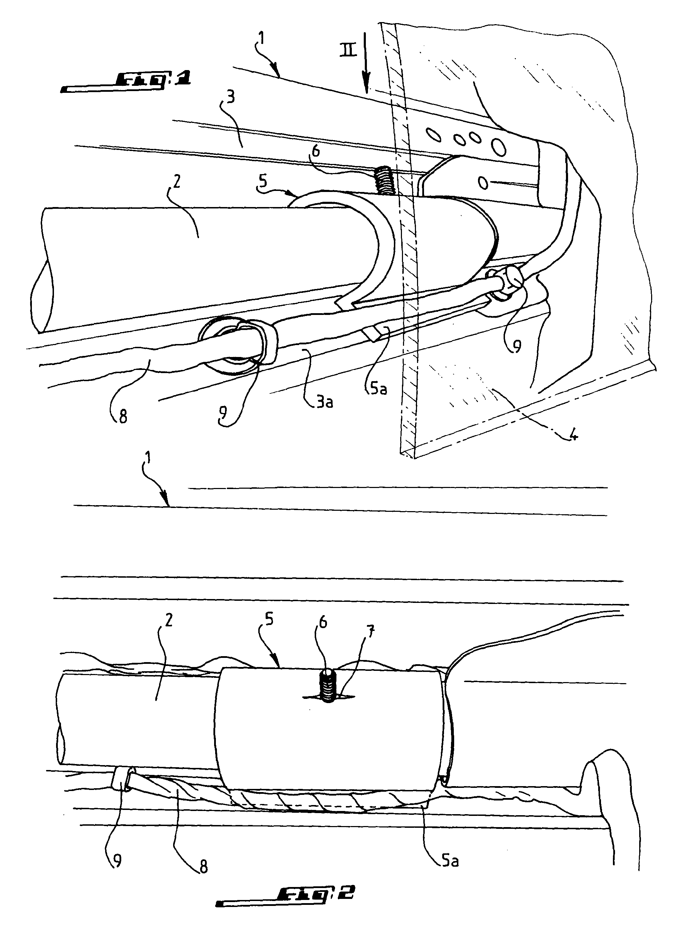

La partie supérieure de la cale 5 située au-dessus de la barre de renfort 2 est pourvue d'une fente longitudinale 7 qui s'écarte élastiquement plus ou moins lorsque le goujon 6 est engagé au travers de la fente 7 comme représenté en figure 2 de manière que les bords de la fente 7 coopèrent avec les gorges du filetage du goujon 6 pour assurer le maintien de la cale 5 relativement à la barre de renfort 2 à une hauteur réglable déterminée relativement à cette dernière. Le matériau mousse constituant la cale 5 est relativement rigide, mais présente néanmoins une certaine élasticité pour que la cale puisse se déformer lorsqu'on l'enfile sur la barre de renfort 2. La possibilité de régler la hauteur de la cale 5 sur le goujon 6 permet de déformer plus ou moins la cale 5 sur la barre de renfort 2 et donc d'ajuster les caractéristiques d'amortissement de cette cale.

Comme le montre la figure 1, la majeure partie de la paroi arquée du manchon en Ω de la cale 5 est dirigée en regard de la vitre 4.

La cale 5 est maintenue en partie inférieure ou basse, opposée à la partie supérieure indexée par le goujon 6, par un faisceau de fils ou de câbles électriques 8 dont une partie, s'étendant sensiblement parallèlement à la barre 2, est en appui sur une aile inférieure 5a de la cale 5 en Ω située en dessous de la barre de renfort 2 de manière à plaquer l'aile 5a sur une partie correspondante de paroi 3a solidaire de la face interne du panneau extérieur 3 de la porte 1.

Le faisceau 8 est fixé à la paroi 3a par des moyens de fixation, tels que des brides 9 ou analogue, situées de part et d'autre de l'aile 5a de la cale 5, les deux brides 9 situées au voisinage des deux extrémités de l'aile 5a étant suffisamment proches de celle-ci pour que le faisceau 8 soit suffisamment tendu et exerce sur l'aile 5a un effort suffisant de maintien de la cale 5 relativement à la barre de renfort 2.

Ainsi, le maintien de la cale 5 par le faisceau 8 permet d'une part d'éviter la sortie de la cale 5 lors de son réglage sur le goujon 6 car on exerce sur cette cale des efforts plus ou moins grands, et d'autre part d'éviter le déchaussage de la cale 5 en cas de claquage de la porte 1.

La dureté du matériau mousse constituant la cale 5 dépend du degré d'amortissement du bruit que l'on veut obtenir lorsque la vitre 4 heurte la cale 5.

Le goujon fileté 6 permet une mise en place très simple de la cale 5 et un réglage en hauteur de celle-ci et le maintien en partie basse de la cale 5 par le faisceau de câbles ou de fils électriques 8 pré-existant dans la porte 1 permet d'éviter à la cale 5 de se déchausser de la barre de renfort 2 lors du claquage de la porte 1.

## Revendications

1. Cale anti-bruit pouvant être montée sur une barre de renfort interne (2) de porte (1) de véhicule automobile en un emplacement permettant d'amortir tout bruit de contact avec la vitre de porte (4) occupant notamment sa position basse lors de la fermeture de la porte (1), la cale (5) étant positionnée sur la barre de renfort (2) par un élément d'indexation (6) solidaire de la barre (2), **caractérisée en ce que** l'élément d'indexation est un goujon (6) dont l'extrémité filetée peut s'engager au travers d'une fente (7) s'écartant élastiquement de la cale (5) de manière que les bords de la fente (7) coopèrent avec les gorges du filetage du goujon (6) pour assurer le maintien de la cale (5) à une hauteur réglable relativement à la barre (2).

2. Cale anti-bruit selon la revendication 1, **caractérisée en ce qu'**elle est également maintenue sur la barre de renfort (2) à l'opposé du goujon d'indexation (6) par un faisceau de fils électriques (8) solidaire de la porte (1) et dont une partie est en appui sur une aile (5a) de la cale (5) pour la plaquer sur une paroi correspondante (3a) de la porte (1).

3. Cale selon la revendication 2, **caractérisée en ce que** le goujon d'indexation (6) est fixé en partie haute de la barre de renfort (2) et l'aile (5a) de la cale (5) est plaquée en partie basse de la barre de renfort (2) sous cette dernière.

4. Cale selon la revendication 2 ou 3, **caractérisée en ce que** le faisceau de fils électriques (8) est fixé à la porte (1) de part et d'autre de l'aile (5a) de la cale (5) par des brides de fixation (9).

5. Cale selon l'une des revendications précédentes, **caractérisée en ce qu'**elle est réalisée en un matériau mousse thermoformé relativement rigide pouvant se déformer élastiquement pour sa mise en place sur la barre de renfort (2).

6. Cale selon l'une des revendications précédentes, **caractérisée en ce qu'**elle se présente sous une forme de manchon à section transversale sensiblement en Q enfilé sur la barre de renfort cylindrique (2) et dont la majeure partie de la paroi arquée est dirigée vers la vitre (4).
